(19) Europäisches Patentamt
European Patent Office
Office européen des brevets

(11) Veröffentlichungsnummer : **0 387 249 B1**

(12) **EUROPÄISCHE PATENTSCHRIFT**

(45) Veröffentlichungstag der Patentschrift :
**29.07.92 Patentblatt 92/31**

(51) Int. Cl.$^5$ : **F16N 11/10**

(21) Anmeldenummer : **88904481.4**

(22) Anmeldetag : **28.05.88**

(86) Internationale Anmeldenummer :
**PCT/DE88/00313**

(87) Internationale Veröffentlichungsnummer :
**WO 88/09899 15.12.88 Gazette 88/27**

---

(54) **VORRICHTUNG ZUM ZUFÜHREN VON FLÜSSIGEN ODER VISKOSEN MEDIEN.**

---

(30) Priorität : **01.06.87 DE 3718341**

(43) Veröffentlichungstag der Anmeldung :
**19.09.90 Patentblatt 90/38**

(45) Bekanntmachung des Hinweises auf die
Patenterteilung :
**29.07.92 Patentblatt 92/31**

(84) Benannte Vertragsstaaten :
**CH FR GB IT LI NL SE**

(56) Entgegenhaltungen :
**EP-A- 0 209 926**
**DE-A- 2 520 241**
**DE-B- 1 256 001**
**DE-B- 2 139 771**

(73) Patentinhaber : **Satzinger GmbH & Co**
**Hammelburger Str. 21**
**W-8737 Euerdorf (DE)**

(72) Erfinder : **JORISSEN, Bernd**
**Hammelburger Str. 21**
**W-8737 Euerdorf (DE)**

(74) Vertreter : **Metzler, Jürgen, Dipl.-Ing.**
**Ketschendorfer Strasse 76**
**W-8630 Coburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

EP 0 387 249 B1

## Beschreibung

Die vorliegende Erfindung betrifft eine Vorrichtung=zum Zuführen von flüssigen oder viskosen Medien, insbesondere von Schmierstoffen, nach dem Oberbegriff des Anspruchs 1.

Es ist eine selbsttätig Schmierstoff abgebende Schmierbüchse bekannt, bei der in einem dicht verschlossenen, ausdehnbaren Körper eine Einrichtung zur Gasentwicklung vorgesehen ist, die aus einem galvanischen Element besteht, dessen positive Elektrode mit der negativen Elektrode stromleitend verbunden ist, wobei die beiden Elektroden durch eine Schraube aus einem von der Elektrolytflüssigkeit im ausdehnbaren Körper abgeschlossenen Raum in diesen bringbar ist, worauf die Entwicklung von Gas ausgelöst wird, das im ausdehnbaren Körper einen Druck aufbaut, durch den er sich täglich um ein gewisses Maß ausdehnt und dadurch über einen Schmierstoffkanal Schmierstoff aus dem mit Schmierstoff gefüllten Raum einer Schmierstelle zuführt (DE-B-12 56001).

Nachdem der ausdehnbare Körper zwar flüssigkeitsdicht, aber nicht gasdicht ist, wurde bei einer anderen bekannten Schmierbüchse zwischen dem ausdehnbaren Körper und dem Schmiermittelraum ein an der zylindrischen Wand der Schmierbüchse dichtend gleitender Trenneinsatz vorgesehen, der bei der Ausdehnung des ausdehnbaren Körpers verschoben wird und den Schmierstoff aus der Schmierstoffkammer in die Schmierstelle drückt (DE-B-21 39771).

Es ist weiterhin schon vorgeschlagen worden, als gaserzeugendes Element eine aus Elektrolyt, Anode und Kathode bestehende kompakte Zelle zu verwenden, die in einem in den Behälterdeckel einsetzbaren Einsatz angeordnet ist (DE-A-3644207). Dieser Einsatz ist ortsfest mit dem Behälterdeckel verbunden

Bei allen bekannten Ausführungen wird ein großer Teil des im Behälter zur Verfügung stehenden Raumes bereits vor dem Ingangsetzen der Gaserzeugung durch den mit Elektrolyt gefüllten ausdehnbaren Körper und die Halterung für das Element und die Ausstoßschraube oder den die Zelle aufnehmenden Einsatz verbraucht. Dieser Raum steht dann nicht mehr zur Aufnahme des abzugebenden Mediums zur Verfügung. Außerdem bauen diese bekannten Ausführungen relativ groß.

Es ist deshalb Aufgabe der vorliegenden Erfindung, eine Vorrichtung zu schaffen, die einen relativ kleinen Bauraum benötigt und trotzdem eine große Menge an abzugebenden Stoffen aufnehmen kann, wobei der Aufbau wesentlich vereinfacht ist.

Diese Aufgabe wird durch das im Kennzeichen des Anspruchs 1 aufgeführte Merkmal gelöst.

Durch die Aufnahme des gaserzeugenden Elements im verschiebbaren Trenneinsatz selbst, können beispielsweise Halterungen für das Element vor Inbetriebnahme sowie für die Ausstoßschraube im Behälterdeckel entfallen.

In den Unteransprüchen sind weitere Maßnahmen zur zweckmäßigen Ausführung und Weiterbildung der erfindungsgemäßen Vorrichtung aufgeführt.

Wenn, wie in Anspruch 2 beschrieben, zur Gaserzeugung eine Elektrolytflüssigkeit und ein Korrosionselement vorgesehen wird, die vor dem Ingangsetzen durch eine elektrolytundurchlässige Folie getrennt sind, dann können beide in einem Hohlraum des verschiebbaren Trenneinsatzes untergebracht werden. Zum Ingangsetzen wird durch eine z. B. durch eine Bohrung in dem Behälterdeckel hindurchgeführte Nadel od. dgl. die Folie perforiert, so daß Elektrolytflüssigkeit an das Korrosionselement gelangen kann, wodurch die Reaktion eingeleitet wird. Die Bohrung im Behälterdeckel kann in einfacher Weise wieder geschlossen werden.

Anstelle eines Korrosionselementes kann nach Anspruch 3 auch eine Anode und eine Kathode in die Elektrolytflüssigkeit eintauchend angeordnet werden, die in einen internen oder externen, ggf. unter Zwischenschaltung einer Stromquelle, Stromkreis eingeschaltet werden.

Ebenfalls kann nach diesem Anspruch 3 eine Kathode und eine zersetzende Anode in zwei durch ein Diaphragma unterteilte Kammern mit Elektrolytflüssigkeit eintauchen. Der durch die Anodenzersetzung erzeugte Strom ist durch Einschalten von außen- oder innenliegenden Widerständen regelbar. So ist auf einfache Art die Gasungsrate steuerbar, sowie anstell- und abstellbar.

In zweckmäßiger und platzsparender Weise wird nach Anspruch 4 vorgeschlagen, als gaserzeugendes Element eine kompakte Zelle, so wie sie beispielsweise für den Betrieb von Hörgeräten oder zur Wasserstoff- oder Sauerstofferzeugung verwendet werden, im verschiebbaren Trenneinsatz vorzusehen. Neben dem geringeren Platzbedarf hat dies auch den Vorteil, daß die Gefahr des austretenden Elektrolyten gebannt ist.

Diese Zelle ist nach weiteren Merkmalen der Erfindung in einen Stromkreis eingeschaltet, wobei Teile der Stromleitung aus dem Behälter nach außen zu einem Schalter od. dgl. geführt werden können. Der die abzugebende Menge bestimmende Widerstand kann im verschiebbaren Trenneinsatz oder außerhalb des Behälters vorgesehen werden.

Es ist aber auch möglich, wie z. B. in den Anspürchen 9 bis 11 beschrieben, zum Schließen des Stromkreises von außen einführbare Mittel, wie Stifte od. dgl. vorzusehen. Diese Mittel können evtl. bis zum Ingangsetzen vorgesehene Isolierungen zerstören oder bleibend als Zwischenkontakt wirken.

2

Der verschiebbare Trennensatz kann, wie in den Ansprüchen 12 bis 13 beschrieben ist, als Kolben aus z. B. Kunststoff mit einer Ausnehmung für das gaserzeugende Element ausgebildet sein. Damit durch den Kunststoff kein Gas hindurchdringt, kann der Kolben nach Anspruch 14 mit einer metallischen Schicht überzogen sein.

Wenn eine kompakte Zelle als gaserzeugendes Element verwendet wird, ist die Gasausbeute im allgemeinen begrenzt. Um die Gasausbeute zu vergrößern kann nach Anspruch 15 bis 16 ein zusätzlicher wasseraufnehmender Raum außerhalb der Zelle, vorteilhaft im verschiebbaren Trenneinsatz vorgesehen werden.

Durch die Dampfdruckunterschiede zwischen der Zelle und der wasseraufnehmenden Masse - diese hat vorzugsweise einen niedrigeren, jedoch annähernd gleichen Dampfdruck als der Elektrolyt in der Zelle - kann je nach Bedarf Wasser von der Zelle in die Masse ab- oder umgekehrt von der Masse wieder an die Zelle zurückgegeben werden.

Um gegebenenfalls das verbrauchte gaserzeugende Element auswechseln oder die Gaserzeugung auf andere Weise als bisher in Gang setzen zu können, wird schließlich nach Anspruch 17 vorgeschlagen, den Behälter geteilt auszuführen, wobei die Teilfuge im Bereich der Druckgaskammer liegt. Auf diese Weise kann die Druckgaskammer und das gaserzeugende Element frei gelegt werden ohne daß die Aufnahmekammer für das abzugebende Medium geöffnet wird. Diese Maßnahme ist vorteilhaft damit verbrauchte Geräte zur Wiederverwendung regeneriert werden können.

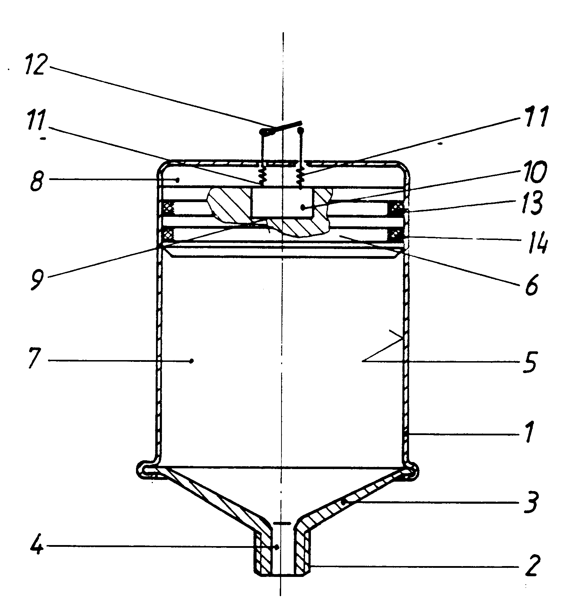

Die Erfindung soll nachstehend anhand des in der einzigen Figur im Schnitt dargestellten Ausführungsbeispiels näher beschrieben werden.

Die Schmierbüchse besteht aus einem Behälter 1, der unten mit einem über ein Gewinde 2 in dem zu schmierenden Maschinenteil zu befestigenden trichterförmigen Boden 3 mit einer Auslaßbohrung 4 verschlossen ist. In der zylindrischen Bohrung 5 des Behälters 1 ist ein Kolben 6 verschiebbar eingesetzt, der die dem Boden 3 zugekehrte Schmierstoffkammer 7 von der Druckgaskammer 8 trennt und der im Betriebszustand den Schmierstoff aus der Schmierstoffkammer 7 durch die Auslaßbohrung 4 in das zu schmierende Maschinenteil drückt.

In einer Ausnehmung 9 im Kolben 6 ist eine aus Anode, Kathode und einem Elektrolyten bestehende Zelle 10 eingesetzt. Diese Zelle 10 ist über Stromleitungen 11 mit einem außerhalb des Behälters 1 angeordneten elektrischen Schalter 12 verbunden. Beim Schließen des Schalters 12 fließt im Stromkreis ein Strom und in der Zelle 10 beginnt die Gasentwicklung. Das Gas sammelt sich in der Druckgaskammer 8 und bewegt den Kolben 6 nach unten. Dabei wird Schmierstoff aus der Schmierstoffkammer 7 durch die Auslaßbohrung 4 herausgedrückt.

Um ein Entweichen des Druckgases und ein Einfließen von Schmiermittel aus der Schmierstoffkammer 7 in die Druckgaskammer 8 zu vermeiden, sind in Nuten in der Umfangsfläche des Kolbens 6 Dichtringe 13 und 14 eingesetzt, die unter Vorspannung an der Bohrung 5 des Behälters 1 abdichtend anliegen.

Die Erfindung ist nicht auf das vorstehend beschriebene Ausführungsbeispiel beschränkt. Es sind vielmehr vielfältige Abänderungen im Rahmen der Patentansprüche möglich. So kann beispielsweise auch eine zusätzliche Stromquelle in den Stromkreis eingeschaltet werden. Auch können entsprechend geformte Dichtlippen die Dichtringe ersetzten.

## Patentansprüche

1. Vorrichtung zum Zuführen von flüssigen oder viskosen Medien, insbesondere von Schmierstoffen, mit einem durch einen verschiebbaren Trenneinsatz (6) od. dgl. in eine Kammer (7) zur Aufnahme des abzugebenden Mediums und in eine Druckgaskammer (8) unterteilten Behälter (1), einer zu einem beliebigen Zeitpunkt in Gang setzbaren Vorrichtung (10) zur elektrochemischen Erzeugung von Gas, das in der Druckgaskammer (8) einen Druck zur Verschiebung des Trenneinsatzes (6) aufbaut, wodurch das abzugebende Medium aus der Kammer (7) herausgefördert wird, dadurch gekennzeichnet, daß das gaserzeugende Element im verschiebbarer, zwischen Druckgaskammer (8) und Kammer (7) zur Aufnahme des abzugebenden Mediums befindlichen Trenneinsatz (6) angeordnet ist.

2. Vorrichtung nach Anspruch 1, dadurch gekennzeichnet, daß als gaserzeugendes Element ein Elektrolytbehälter und ein Korrosionselement vorgesehen ist, die durch eine elektrolytundurchlässige Folie von einander getrennt sind, welche zum Ingangsetzen durch eine Nadel od. dgl. perforiert wird.

3. Vorrichtung nach Anspruch 1, dadurch gekennzeichnet, daß als gaserzeugendes Element ein Elektrolytbehälter und je eine in die Elektrolytflüssigkeit eintauchende Anode und Kathode vorgesehen ist, wobei Anode oder Kathode in einem internen oder externen Stromkreis angeordnet sind.

4. Vorrichtung nach Anspruch 1, dadurch gekennzeichnet, daß als gaserzeugendes Element eine kompakte, aus Elektrolyt, Anode und Kathode bestehende Zelle (10) vorgesehen ist.

EP 0 387 249 B1

5. Vorrichtung nach Anspruch 4, dadurch gekennzeichnet, daß die Zelle (10) zusammen mit Teilen eines die Anode und die Kathode sowie einen elektrischen Widerstand miteinander verbindenden Stromkreises im verschiebbaren Trenneinsatz vorgesehen ist.

6. Vorrichtung nach einem der Ansprüche 3 bis 5, dadurch gekennzeichnet, daß die Stromleitung (11) nach außen aus dem Behälter (1) herausgeführt ist.

7. Vorrichtung nach Anspruch 6, dadurch gekennzeichnet, daß im aus dem Behälter (1) herausgeführten Teil der Stromleitung (11) ein Schalter (12) od. dgl. zum Schließen des Stromkreises angeordnet ist.

8. Vorrichtung nach Anspruch 6 oder 7, dadurch gekennzeichnet, daß ein einstellbarer Widerstand oder ein Festwiderstand im aus dem Behälter (1) herausgeführten Teil der Stromleitung vorgesehen ist.

9. Vorrichtung nach einem der Ansprüche 3 oder 5, dadurch gekennzeichnet, daß zum Schließen des Stromkreises von außen einführbare Mittel vorgesehen sind.

10. Vorrichtung nach Anspruch 9, dadurch gekennzeichnet, daß als Mittel zum Schließen des Stromkreises ein Stift od. dgl. durch den Behälterdeckel hindurchgreifend vorgesehen ist.

11. Vorrichtung nach einem der Ansprüche 3 oder 5, dadurch gekennzeichnet, daß im Stromkreis Isolierungen vorgesehen sind, die mit Hilfe von von außen einführbaren Mitteln unterbrochen werden.

12. Vorrichtung nach einem der Ansprüche 1 bis 11, dadurch gekennzeichnet, daß der verschiebbare Trenneinsatz als Kolben (6) ausgebildet ist, in dessen Umfangsfläche Nuten zur Aufnahme von Dichtringen (13,14) vorgesehen sind.

13. Vorrichtung nach Anspruch 12, dadurch gekennzeichnet, daß der Kolben (6) aus Kunststoff od. dgl. gefertigt ist und eine Ausnehmung (9) zur Aufnahme des gaserzeugenden Elements (10) aufweist.

14. Vorrichtung nach Anspruch 13, dadurch gekennzeichnet, daß der Kolben (6) mit einer metallischen Schicht überzogen ist.

15. Vorrichtung nach einem der Ansprüche 1 bis 14, dadurch gekennzeichnet, daß ein zusätzlicher, wasseraufnehmender Raum vorgesehen ist.

16. Vorrichtung nach Anspruch 15, dadurch gekennzeichnet, daß der Raum im verschiebbaren Trenneinsatz (6) auf der der Druckgaskammer zugekehrten Seite angeordnet und mit einer wasseraufnehmenden Masse ausgefüllt ist.

17. Vorrichtung nach einem der Ansprüche 1 bis 16, dadurch gekennzeichnet, daß der Behälter (1) geteilt ausgebildet ist, wobei die Teilfuge im Bereich der Druckgaskammer (8) angeordnet ist.


## Revendications

1. Dispositif pour l'alimentation en continu de fluides liquides ou visqueux, en particulier de lubrifiants, avec un réservoir subdivisé, par un insert (6) déplaçable ou similaire, en une chambre (7) destinée à recevoir le fluide à distribuer et une chambre à gaz sous pression (8), un dispositif (10), pouvant être mis en marche à tout moment au choix, pour le dégagement électrochimique de gaz qui, dans la chambre à gaz sous pression (8), crée une pression pour le déplacement de l'insert de séparation (6), par lequel le fluide à distribuer est transporté hors de la chambre (7), caractérisé en ce que l'élément gazogène est disposé dans l'insert de séparation (6) déplaçable se trouvant entre la chambre à gaz sous pression (8) et la chambre (7) destinée à recevoir le fluide à distribuer.

2. Dispositif suivant la revendication 1, caractérisé en ce qu'il est prévu, comme élément gazogène, un réservoir à électrolyte et un élément de corrosion qui sont séparés l'un de l'autre par un film imperméable à l'électrolyte qui, pour la mise en marche, est perforé par une aiguille ou similaire.

3. Dispositif suivant la revendication 1, caractérisé en ce qu'il est prévu, comme élément gazogène, un réservoir à électrolyte et chaque fois une anode et une cathode plongeant dans le fluide électrolytique, l'anode ou la cathode étant disposées dans un circuit électrique interne ou externe.

4. Dispositif suivant la revendication 1, caractérisé en ce qu'il est prévu, comme élément gazogène, une cellule compacte (10) composée d'un électrolyte, d'une anode et d'une cathode.

5. Dispositif suivant la revendication 4, caractérisé en ce que la cellule (10) est prévue, ensemble avec les parties d'un circuit électrique reliant entre elles l'anode et la cathode ainsi qu'une résistance électrique, dans l'insert de séparation déplaçable.

6. Dispositif suivant l'une des revendications 3 à 5, caractérisé en ce que la ligne électrique (11) est conduite vers l'extérieur, hors du réservoir (1).

7. Dispositif suivant la revendication 6, caractérisé en ce que dans la partie de la ligne électrique (11) sortie du réservoir (1) est disposé un interrupteur (12) ou similaire pour fermer le circuit électrique.

8. Dispositif suivant la revendication 6 ou 7, caractérisé en ce qu'une résistance réglable ou une résistance fixe est prévue dans la partie de la ligne électrique (11) sortie du réservoir (1).

4

EP 0 387 249 B1

9. Dispositif suivant l'une des revendications 3 ou 5, caractérisé en ce que, pour fermer le circuit électrique, il est prévu des moyens pouvant être introduits de l'extérieur.

10. Dispositif suivant la revendication 9, caractérisé en ce qu'il est prévu, comme moyens pour fermer le circuit électrique, une goupille ou similaire traversant le couvercle de réservoir.

11. Dispositif suivant l'une des revendications 3 ou 5, caractérisé en ce que dans le circuit électrique sont prévus des isolementss qui sont interrompus à l'aide de moyens pouvant être introduits de l'extérieur.

12. Dispositif suivant l'une des revendications 1 à 11, caractérisé en ce que l'insert de séparation déplaçable se présente sous forme d'un piston (6), dans la surface périphérique duquel sont prévues des rainures pour recevoir des bagues d'étanchéité (13, 14).

13. Dispositif suivant la revendication 12, caractérisé en ce que le piston (6) est réalisé en matière plastique ou similaire et présente un évidement (9) gour recevoir l'élément gazogène (10).

14. Dispositif suivant la revendication 13, caractérisé en ce que le piston (6) est recouvert d'une couche métallique.

15. Dispositif suivant l'une des revendications 1 à 14, caractérisé en ce qu'il est prévu une chambre supplémentaire absorbant l'eau.

16. Dispositif suivant la revendication 15, caractérisé en ce que la chambre est disposée dans l'insert de séparation (6) déplaçable, du côté orienté vers la chambre à gaz sous pression, et est remplie d'une masse absorbant l'eau.

17. Dispositif suivant l'une des revendications 1 à 16, caractérisé en ce que le réservoir (1) se présente divisé, le joint de division étant disposé à l'endroit de la chambre à gaz sous pression (8).


**Claims**

1. An apparatus for feeding liquid or viscous media, in particular lubricants, having a container (1) divided by a displaceable separating insert (6) or the like into a chamber (7) for accommodating the medium to be dispensed and into a pressurised gas chamber (8), a device (10) which can be set into operation at any time and which serves for the electrochemical production of gas which builds up in the pressurised gas chamber (8) a pressure for displacing the separating insert (6), whereby the medium to be dispensed is discharged from the chamber (7), characterised in that the gas-producing element is disposed in the displaceable separating insert (6) situated between the pressurised gas chamber (8) and the chamber (7) for accommodating the medium to be dispensed.

2. An apparatus according to Claim 1, characterised in that an electrolyte container and a corrosion element are provided as the gas-producing element, which are separated from one another by a sheet which is impermeable to electrolyte and which is perforated by a needle or the like so as to start the process.

3. An apparatus according to Claim 1, characterised in that as the gas-producing element there are provided an electrolyte container and a respective anode and cathode immersed in the electrolytic fluid, wherein the anode or cathode are disposed in an internal or external circuit.

4. An apparatus according to Claim 1, characterised in that as the gas-producing element there is provided a compact cell (10) comprising electrolyte, anode and cathode.

5. An apparatus according to Claim 4, characterised in that the cell (10), together with parts of a circuit connecting with one another the anode and cathode, as well an electrical resistance, are provided in the displaceable separating insert.

6. An apparatus according to any one of Claims 3 to 5, characterised in that the lead (11) extends outwardly from the container (1).

7. An apparatus according to Claim 6, characterised in that a switch (12) or the like for closing the circuit is disposed in that part of the lead (11) extending out of the container (1).

8. An apparatus according to Claim 6 or 7, characterised in that a variable resistance or a fixed resistance is provided in that part of the lead extending out of the container (1).

9. An apparatus according to either Claim 3 or Claim 5, characterised in that means which can be introduced from the outside are provided for closing the circuit.

10. An apparatus according to Claim 9, characterised in that a pin or the like engaging through the container cover is provided as the means for closing the circuit.

11. An apparatus according to either Claim 3 or Claim 5, characterised in that insulations are provided in the circuit, which are interrupted by means which can be introduced from the outside.

12. An apparatus according to any one of Claims 1 to 11, characterised in that the displaceable separating insert takes the form of a piston (6), the peripheral surface of which is provided with grooves for accommodating sealing rings (13, 14).

5

13. An apparatus according to Claim 12, characterised in that the piston (6) is made from plastics material or the like and has a recess (9) for accommodating the gas-producing element (10).

14. An apparatus according to Claim 13, characterised in that the piston (6) is coated with a metallic layer.

15. An apparatus according to any one of Claims 1 to 14, characterised in that an additional, water-absorbing chamber is provided.

16. An apparatus according to Claim 15, characterised in that the chamber in the displaceable separating insert (6) is disposed on the side nearest the pressurised gas chamber and is filled with a water-absorbing substance.

17. An apparatus according to any one of Claims 1 to 16, characterised in that the container (1) is divided, the joint being disposed in the vicinity of the pressurised gas chamber (8).